# DEMANDE DE BREVET EUROPEEN

(11) **EP 1 876 795 A1**
(43) Date de publication de la demande: **09.01.2008**
(21) Numéro de dépôt: 07111651.1
(22) Date de dépôt: 03.07.2007
(51) Int. Cl.: H04L 29/06, H04L 29/12, H04L 29/08

(54) **Procédé de localisation d'un softphone et terminal pour la mise en oeuvre de ce procédé**

(30) Priorité: 04.07.2006 FR 0652785
(71) Demandeur: Alcatel Lucent, 75008 Paris (FR)
(72) Inventeur: Bastide, Patrick, 78380, BOUGIVAL (FR)
(74) Mandataire: Hedarchet, Stéphane

(57) **Abrégé**

Procédé pour localiser un terminal dans un réseau comprenant un serveur d'affectation d'identifiants, ce procédé comprenant une étape de préparation d'un premier message, contenant une demande d'identifiant pour le terminal; une étape de diffusion sur le réseau de ce premier message à destination du serveur d'affectation d'identifiant; ce procédé étant caractérisé en ce qu'avant sa diffusion, ce message est intercepté pour y adjoindre l'identité du port du terminal sur lequel sera émis le message ainsi modifié. Terminal pour la mise en oeuvre d'un tel procédé.

## Description

L'invention a trait au domaine des télécommunications.

Plus précisément, elle concerne la mise en relation de deux terminaux, un terminal appelant, en particulier un *IP softphone* et un terminal appelé, typiquement un centre d'appel.

Par *« IP softphone* » ou softphone (téléphone logiciel IP) on désigne un logiciel employé pour la téléphonie sur Internet (ToIP) à l'aide d'un ordinateur.

L'invention concerne notamment les communications en cas d'évènement brusque et généralement imprévu qui requiert des mesures immédiates pour minimiser ses conséquences néfastes. De telles situations génèrent du stress pour les témoins éventuels comme pour les acteurs de tels évènements.

L'efficacité des centres d'appel (par exemple centre d'appel de secours, *Emergency Calling Services Enhanced 911* aux Etats-Unis et au Canada ou 112 en Europe) est fréquemment amoindrie par le manque partiel ou total d'informations sur la localisation de l'appelant qui ne sait pas nécessairement lui-même où il se trouve exactement. Le stress de l'appelant peut également limiter ses capacités à donner clairement sa localisation.

L'emploi d'un *IP softphone* pose des difficultés particulières pour la localisation de l'appel, lorsque ce logiciel est installé sur un ordinateur déplacé d'un réseau à un autre. Chaque ordinateur d'un internet TCP/IP *(Transmission Control Protocol*/ *Internet Protocol)* dispose en effet d'une adresse IP unique, cette adresse comprenant un préfixe réseau définissant le réseau sur lequel l'ordinateur est connecté. Il en résulte qu'a priori, lorsqu'un ordinateur est déplacé d'un réseau à un autre, soit les routeurs propagent la route spécifique pour atteindre le nouvel emplacement de cet ordinateur, soit l'adresse IP doit être modifiée, avantageusement par affectation dynamique.

Tout comme pour les terminaux mobiles, la localisation d'un *IP softphone* peut mettre en oeuvre deux types de méthode :
- un premier type de méthode basée sur une intelligence de réseau *(network-based);*
- un deuxième type de méthode, basée sur une intelligence du terminal *(handset based),* par exemple localisation par GPS *(Global Positioning System).*

Ainsi, par exemple, dans une conception antérieure, le protocole standard SNMP *(Simple Network Management Protocol)* fournit des informations à un LIS *(Location Information Server)* permettant d'identifier les changement d'adresses MAC *(Medium Access Control)* lorsque les ports sont connectés et déconnectés. Un mécanisme de capture (décrit dans RFC 2863) permet une mise à jour en temps réel des changements dans le réseau Ethernet. La base de données MIB *(Management Information Base)* permet à un service de messagerie réseau NMS *(Network Message System)* de contrôler la table des affectations d'adresses MAC. Cette conception présente plusieurs inconvénients. Il est nécessaire que les agents SNMP supportent les dispositions prévues dans RFC 1493 et RFC 2674. L'obtention de la table des affectations d'adresses MAC peut prendre un temps important pour les réseaux de grande taille. Le protocole SNMP utilise le protocole de transmission UDP *(User Datagram Protocol)* qui ne garanti pas la délivrance des données, d'où des risques de perte lorsque un grand volume de données est à délivrer.

Dans une variante de cette conception antérieure, le protocole LLDP-MED *(Link Layer Discovery Protocol Media Endpoint Discovery)* permet de ne tenir compte que des changements dans les affectations des ports pour les dispositifs VolP. (*Voice Over Internet Protocol).*

Dans une autre conception antérieure, une requête DHCP *(Dynamic Host Configuration Protocol)* est effectuée en utilisant l'option SubOpt1 de RFC3046 (*Relay Agent Information Option*)*.* Un switch Ethernet adjoint son adresse MAC et le numéro de port à la requête DHCP.

On connaît par ailleurs un traceur DHCP permettant de fournir à un client DHCP l'information de localisation correspondant au port du LAN (*Local Area Network*) sur lequel il est raccordé. Le traceur DHCP nécessite de rajouter une option 123 dans la requête DHCP (DHCPDISCOVER) et de recevoir les données de localisation dans cette même option de la réponse du serveur (DHCPOFFER), ce qui n'est pas possible sur un PC Windows, à la connaissance de la demanderesse.

L'invention vise à apporter une solution aux problèmes posés par la mise en oeuvre des techniques antérieures.

A ces fins, l'invention se rapporte, selon un premier aspect, à un procédé pour localiser un terminal dans un réseau comprenant un serveur d'affectation d'identifiants, ce procédé comprenant :
- une étape de préparation d'un premier message, contenant une demande d'identifiant pour le terminal;
- une étape de diffusion sur le réseau de ce premier message à destination du serveur d'affectation d'identifiant; ce premier message, avant sa diffusion, étant intercepté pour y adjoindre l'identité du port du terminal sur lequel sera émis le message ainsi modifié.

Le procédé présente, selon diverses réalisations, les caractères suivants, le cas échéant combinés :
- il comprend en outre une étape de préparation d'un deuxième message, contenant un identifiant pour le terminal, et une étape de diffusion sur le réseau de ce deuxième message à destination du terminal, ce deuxième message étant intercepté à son arrivée au terminal pour extraire les données de localisation du terminal;
- le premier message est une requête DHCPDISCOVER, le deuxième message étant une réponse DHCPOFFER du serveur ;
- avant sa diffusion, une option DHCP 123 est adjointe à la requête DHCPDISCOVER.

L'invention se rapporte, selon un deuxième aspect, à un terminal pour la mise en oeuvre du procédé tel que présenté ci dessus, ce terminal comprenant : des moyens de génération d'un premier message, contenant une demande d'identifiant réseau ; des moyens d'interception de ce premier message, avant sa diffusion, et des moyens d'adjonction de l'identité du port sur lequel sera émis le message.

Selon diverses réalisations, le terminal présente les caractères suivants, le cas échéant combinés :
- l'interception du premier message est effectuée par un driver intermédiaire relié à un pilote Ethernet, le pilote Ethernet adressant au driver intermédiaire le premier message, le driver intermédiaire retournant au pilote Ethernet le premier message dans lequel a été adjoint l'identité du port sur lequel sera émis le message ;
- le terminal est client DHCP, le driver intermédiaire étant un driver NDIS, générant une option DHCP-123 demandant au switch Ethernet de rajouter dans la requête DHCPDISCOVER une option 82 ;
- le driver NDIS est apte à supprimer d'une réponse DHCPOFFER l'option 123 avant de délivrer la réponse DHCPOFFER au client DHCP;
- le terminal est pourvu d'un logiciel téléphone IP (softphone).

D'autres objets et avantages de l'invention apparaîtront à la lumière de la description suivante de modes de réalisation, description qui va être effectuée en se référant aux dessins annexés dans lesquels :
- la figure 1 est un tableau de présentation du format d'un message (paquet) DHCP ;

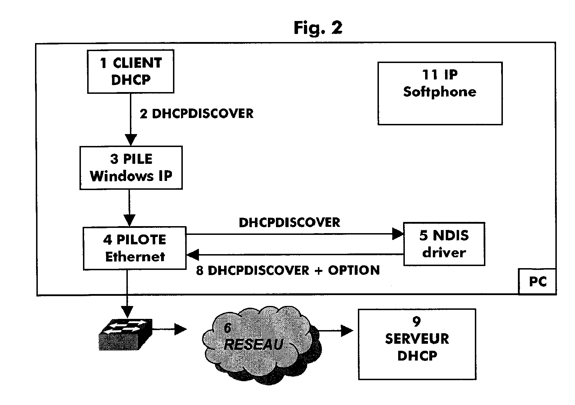

- la figure 2 est un schéma d'une étape du procédé selon une mise en oeuvre de l'invention ;
- la figure 3 est un schéma d'une étape du procédé selon une mise en oeuvre de l'invention.

L'invention utilisant, dans une mise en oeuvre avantageuse, le protocole d'amorce DHCP, une description sommaire de ce protocole va maintenant être effectuée.

DHCP est un protocole de la couche d'application utilisant IP/UDP (RFC 768). DHCP étend les fonctionnalités du plus ancien BOOTP (*BOOTstrap Protocol*) (RFC951), en permettant notamment l'allocation dynamique d'adresses.

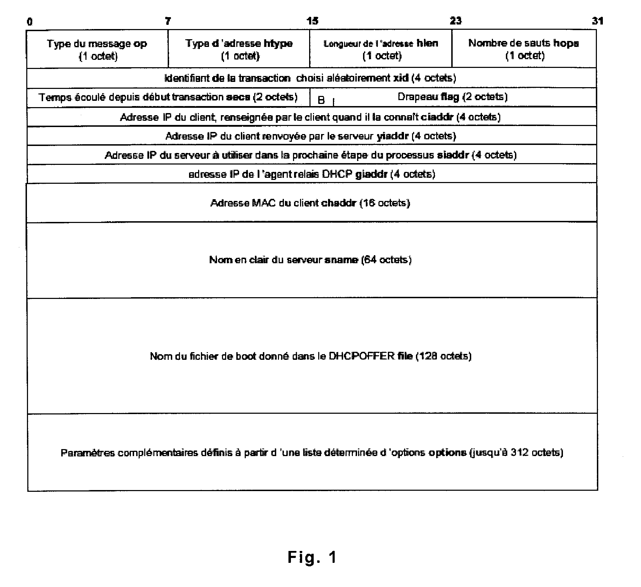

Les champs d'un message DHCP sont indiqués en figure 1. La plupart des champs d'un message DHCP sont identiques à ceux d'un message BOOTP.

Le champ « Op » indique si le message DHCP est une demande ou une réponse. Si op vaut 1, le message est un BootRequest, c'est à dire une trame DHCP émise par le client à destination du serveur. Si op vaut 2, le message est un BootReply, c'est-à-dire une trame émise par le serveur à destination du client.

Le champ « htype », comme dans le protocole ARP *(Adress Resolution Protocol),* indique le type de réseau.

Le champ « hlen » (ou Lg_adr-phy) indique, comme dans le protocole ARP, la longueur de l'adresse de l'interface matérielle.

Le champ « hops » est un compteur indiquant le nombre d'agents relais visités pour traiter le message. Le client DHCP assigne la valeur zéro à ce champ « hops ». Si le serveur reçoit la demande et la retransmet à une autre machine, la valeur de ce compteur est incrémentée.

Le champ « xid » est l'identifiant de la transaction, utilisé pour associer les requêtes d'un client et les réponses d'un serveur à une même transaction DHCP.

Le champ « secs » est le nombre de secondes depuis le début du processus de configuration.

Le champ « flags » est un champ dont seul le bit B de poids fort a une signification (« Flag de Broadcast »), tous les autres bits étant à zéro. Ce bit B de poids fort est mis à 1 lorsque le client ne peut pas accepter un point à point (*unicast*) avant la configuration complète de TCP/IP. Ainsi, le serveur DHCP sait qu'il doit faire une diffusion (*broadcast*) pour transmettre les réponses.

Le champ « ciaddr » est l'adresse IP du client.

Le champ « yiaddr » est l'adresse IP du client telle que fournie par le serveur. Ce champ est initialisé par le serveur lorsque celui-ci offre une adresse à un client, ou confirme une adresse à un client.

Le champ « siaddr » est l'adresse IP du serveur.

Le champ « giaddr » est l'adresse IP de l'agent relais à utiliser.

Le champ « chaddr » est l'adresse de l'interface matérielle du client.

Le champ « sname » est le nom de domaine du serveur (optionnel).

Le champ « file » est le chemin d'accès complet du fichier de chargement de l'image système (optionnel).

Le champ « options » correspond au champ « zone réservée au constructeur » (*vendor*) de BOOTP. Comme dans BOOTP, chaque option comporte un champ Code sur un octet, et un champ *Longueur* d'un octet suivi des octets de données qui composent l'option. La longueur du champ « options » dépend de la longueur maximale d'un message DHCP. Cette valeur peut être augmentée avec l'option *"Maximum DHCP Message* Size".

Définies dans RFC2132, les options sont numérotées de zéro à 255 et permettent de distribuer aux clients différentes informations en plus de leur adresse IP et leur masque de sous-réseau, telles que par exemple les adresses des serveurs DNS (*Domain Name System*), NTP (*Network Time Protocol* RFC1305), SMTP (*Simple Mail Transfert Protocol* RFC2821), IRC (*Internet Relay Chat* RFC1459).

La procédure de définition et d'enregistrement d'une nouvelle option est détaillée dans les RFC2132, 2489 et 2939.

DHCP fonctionne sur le modèle client-serveur. Pour trouver et dialoguer avec un serveur DHCP, une machine émet un paquet dit de broadcast sur l'adresse IP 255.255.255.255 et sur le réseau local. Ce paquet va être reçu par toutes les machines connectées au réseau. Lorsque le serveur DHCP reçoit ce paquet, il répond par un autre paquet de broadcast contenant toutes les informations requises pour la configuration. Si le client accepte la configuration, il renvoie un paquet pour informer le serveur qu'il garde les paramètres, sinon, il fait une nouvelle demande.

Plus précisément, les messages échangés entre un serveur DHCP et un client sont les suivants :
- DHCPDISCOVER utilisé par un client qui cherche sa configuration pour localiser le serveur ;
- DHCPOFFER qui permet à un serveur de proposer une configuration au client;
- DHCPREQUEST qui permet à un client d'accepter l'offre de configuration d'un serveur et par conséquent, de refuser celle des autres serveurs ;
- DHCPACK qui permet à un serveur d'offrir une configuration;
- DHCPNACK qui permet à un serveur de refuser d'offrir une configuration (par exemple, il ne possède plus d'adresses IP valables) ;
- DHCPDECLINE qui permet à un client d'indiquer une offre de configuration invalide ;
- DHCPRELEASE qui permet à un client de libérer une offre de configuration précédemment acceptée.

Si le client DHCP connaît son adresse IP, il diffuse, sur son réseau local physique un message DHCPDISCOVER permettant de découvrir les serveurs DHCP du réseau et de demander l'obtention d'une configuration DHCP.

Chaque serveur recevant ce message DHCPDISCOVER et capable de satisfaire la demande du client DHCP peut répondre avec un message DHCPOFFER qui inclut une adresse réseau IP valide dans le champ "yiaddr".

Le client choisit une offre et diffuse un message DHCPREQUEST qui doit inclure l'option "Server Identifier" indiquant quel serveur il a sélectionné. Les serveurs qui ne sont pas sélectionnés utilisent le message DHCPREQUEST comme notification que le client n'a pas sélectionné leur offre. Le serveur DHCP sélectionné envoie un message DHCPACK qui contient la configuration pour le client demandeur. Si le client détecte que l'adresse est déjà utilisée (par exemple, via l'utilisation de ARP *Address Resolution Protocol* RFC826) il envoie un DHCPDECLINE au serveur DHCP et relance le processus de configuration. Si le client reçoit un DHCPNACK, le client relance le processus de configuration.

L'invention tire profit du fonctionnement de DHCP pour la localisation du client.

Le client DHCP **1** génère une requête DHCPDISCOVER **2** à destination de la pile IP de Windows **3.** Cette requête **2** passe ensuite au pilote Ethernet **4.** La requête est interceptée par un driver NDIS (*Network Driver Interface Specification)* **5** avant son émission sur le réseau **6.** Grâce au driver NDIS **5,** une option **7** DHCP-123 est ajoutée à la requête **1.** Cette option DHCP-123 permet de demander au switch de rajouter dans la requête **2** l'option DHCP-82 avec l'identité du port sur lequel est émis cette requête DHCPDISCOVER.

Après adjonction de l'option **7,** la requête modifiée **8** est émise sur le réseau **6** à destination d'au moins un serveur **9.**

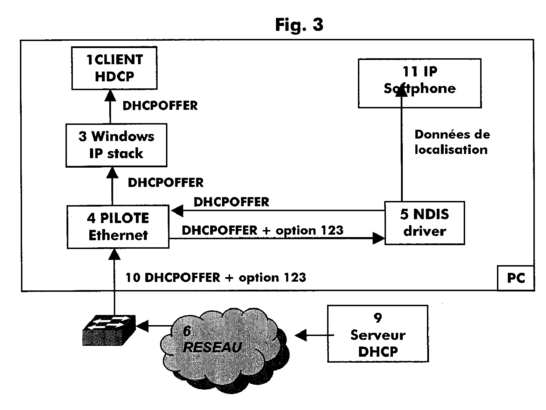

Avantageusement, le procédé comprend également l'interception de la réponse **10** DHCPOFFER par le driver NDIS **5,** cette interception permettant au driver NDIS **5** de récupérer la réponse du serveur DHCP **9** dans l'option 123 contenant la localisation du client. Ainsi qu'il est représenté en figure 3, le driver NDIS **5** peut supprimer cette option avant de la délivrer au client DHCP **1** de manière à ne pas le perturber s'il ne la comprend pas.

Lorsque le PC Windows client est pourvu d'un softphone **11,** il est ainsi possible de connaître sa géolocalisation de manière, entre autres, à la fournir lors d'un appel de sécurité, par exemple 911 aux Etats-Unis et au Canada ou 112 en Europe.

De cette manière l'utilisateur n'a plus de contrainte de mobilité et le gestionnaire du réseau n'a plus la lourdeur de l'administration liée aux déménagements.

### NOMENCLATURE

1 CLIENT HDCP
2 REQUETE DHCPDISCOVER
3 PILE IP WINDOWS
4 PILOTE ETHERNET
5 DRIVER NDIS
6 RESEAU
7 OPTION DHCP 123
8 REQUËTE DHCPDISCOVER MODIFIEE
9 SERVEUR DHCP
10 REPONSE DHCPOFFER
11 SOFTPHONE

## Revendications

1. Procédé pour localiser un terminal dans un réseau comprenant un serveur (9) d'affectation d'identifiants, ce procédé comprenant :
- une étape de préparation d'un premier message, contenant une demande d'identifiant pour le terminal;
- une étape de diffusion sur le réseau (6) de ce premier message à destination du serveur (9) d'affectation d'identifiant;
ce procédé étant **caractérisé en ce qu'**avant sa diffusion, ce message est intercepté pour y adjoindre l'identité du port du terminal sur lequel sera émis le message ainsi modifié.

2. Procédé selon la revendication 1, **caractérisé en ce qu'**il comprend en outre une étape de préparation d'un deuxième message, contenant un identifiant pour le terminal, et une étape de diffusion sur le réseau (6) de ce deuxième message à destination du terminal, ce deuxième message étant intercepté à son arrivée au terminal pour extraire les données de localisation du terminal.

3. Procédé selon la revendication 1 ou 2, **caractérisé en ce que** le premier message est une requête DHCPDISCOVER, le deuxième message étant une réponse DHCPOFFER du serveur.

4. Procédé selon la revendication 3, **caractérisé en ce qu'**avant sa diffusion, une option DHCP 123 est adjointe à la requête DHCPDISCOVER.

5. Terminal pour la mise en oeuvre du procédé tel que présenté dans l'une quelconque des revendications précédentes, **caractérisé en ce qu'**il comprend :
- des moyens de génération d'un premier message, contenant une demande d'identifiant réseau ;
- des moyens d'interception de ce premier message, avant sa diffusion, et des moyens d'adjonction de l'identité du port sur lequel sera émis le message.

6. Terminal selon la revendication 5, **caractérisé en ce que** l'interception du premier message est effectuée par un driver intermédiaire relié à un pilote Ethernet (4), le pilote Ethernet adressant au driver intermédiaire le premier message, le driver intermédiaire retournant au pilote Ethernet le premier message dans lequel a été adjoint l'identité du port sue lequel sera émis le message.

7. Terminal selon la revendication 6, **caractérisé en ce qu'**il est client DHCP, le driver intermédiaire (5) étant un driver NDIS, générant une option DHCP-123 demandant au switch Ethernet de rajouter dans la requête DHCPDISCOVER une option 82.

8. Terminal selon la revendication 7, **caractérisé en ce que** le driver NDIS est apte à supprimer d'une réponse DHCPOFFER l'option 123 avant de délivrer la réponse DHCPOFFER au client DHCP.

9. Terminal selon l'une quelconque des revendications 5 à 8, **caractérisé en ce qu'**il est pourvu d'un logiciel téléphone IP (11) (softphone).
